# EUROPÄISCHE PATENTSCHRIFT

(11) **EP 0 722 562 B1**
(45) Veröffentlichungstag und Bekanntmachung des Hinweises auf die Patenterteilung: **17.06.1998**
(21) Anmeldenummer: 94928269.3
(22) Anmeldetag: 28.09.1994
(51) Int. Cl.: G01L 23/22

(54) **VERFAHREN ZUR KLOPFERKENNUNG**
ENGINE KNOCK DETECTION PROCESS
PROCEDE DE DETECTION DE CLIQUETIS DU MOTEUR

(30) Priorität: 05.10.1993 DE 4333965
(43) Veröffentlichungstag der Anmeldung: 24.07.1996
(73) Patentinhaber: ROBERT BOSCH GMBH, 70442 Stuttgart (DE)
(72) Erfinder: UNLAND, Stefan, D-71701 Schwieberdingen (DE); TORNO, Oskar, D-71701 Schwieberdingen (DE); BOLLIG, Stefan, D-71706 Markgroeningen 2 (DE); HAEMING, Werner, D-74861 Neudenau (DE); ROTHHAAR, Ulrich, D-70469 Stuttgart (DE); SURJADI, Iwan, D-71665 Vaihingen (DE); HILBERT, Wolfgang, D-71696 Moeglingen (DE); SLOBODA, Robert, D-71706 Markgroeningen (DE); BAEUERLE, Michael, D-74354 Besigheim (DE); EDELMANN, Thomas, D-74321 Bietigheim-Bissingen (DE)
(86) Internationale Anmeldenummer: DE9401142
(87) Internationale Veröffentlichungsnummer: WO9510032

(56) Entgegenhaltungen:
- EP-A- 0 458 993
- EP-A- 0 590 893
- DE-A- 4 128 577
- GB-A- 2 066 894
- GB-A- 2 265 006
- US-A- 4 699 106
- PATENT ABSTRACTS OF JAPAN vol. 11, no. 44 (M-560) 10. Februar 1987 & JP-A-61 207 877
- PATENT ABSTRACTS OF JAPAN vol. 7, no. 249 (P-234) (1394) 5. November 1983 & JP-A-58 135 435

## Beschreibung

### Stand der Technik

Die Erfindung betrifft ein Verfahren zur Klopferkennung nach der Gattung des Hauptansprruchs. Es ist bereits ein Verfahren dieser Art aus der DE-PS 31 37 016 bekannt. Bei diesem Verfahren zur Klopferkennung einer Brennkraftmaschine wird mindestens ein Klopfsensor verwendet. Dieser Klopfsensor erfaßt für jeden Zylinder über einen bestimmten Kurbelwellenwinkel den Geräuschpegel. Das so erfaßte Klopfsensorsignal wird über diesen Kurbelwellenbereich integriert. Für die Zuordnung der erfaßten Motorgeräusche zu den einzelnen Zylindern wird eine Zylinderidentifikation durchgeführt. Die erfaßten Klopfsensorsignale werden in einem Zeitfenster aufintegriert und der Integralwert zur Klopferkennung mit einer Klopfschwelle verglichen. Dabei wird die Klopfschwelle zur Erkennung von Klopfen nicht fest vorgegeben, sondern mit jeder Verbrennung zyklisch erneuert. Die Festlegung der Klopfschwelle erfolgt, indem die vorherige Klopfschwelle mit dem aktuellen Klopfsensorsignal beaufschlagt wird, so daß die Klopfschwelle der Geräuschentwicklung des Motors beispielsweise bei Alterung angepaßt wird. Klopfen wird erkannt, wenn das Integral über das Zeitfenster, in welchem die Sensorsignale ausgewertet werden, die Klopfschwelle überschreitet.

Nach einer Klopferkennung wird der über ein Drehzahl-Last-Kennfeld bestimmte Grundzündwinkel um einen bestimmten Betrag, welcher vom Steuergerät in Abhängigkeit des erfaßten Klopfens und aufgrund der Betriebsparameter bestimmt wird, verändert. Die Veränderung der Hintergrundgeräusche und damit die Klopfschwelle beispielsweise durch Alterung über die Motorlebensdauer kann dazu führen daß irgendwann der Integratorwert die ständig neu berechnete Klopfschwelle auch bei starkem Klopfen nicht mehr erreicht. Wird nun das Geräusch des Motors oder eines Zylinders beispielsweise durch mechanische Schäden oder Alterung immer lauter, so kann unter Umständen selbst starkes Klopfen nicht erkannt werden.

### Vorteile der Erfindung

Das erfindungsgemäße Verfahren mit dem kennzeichnenden Merkmal des unabhängigen Anspruchs 1 demgegenüber den Vorteil, daß eine Klopferkennung auch bei Lauterwerden des Motors und damit einem Ansteigen der Klopfschwelle gewährleistet ist.

Dabei ermöglicht die Multiplikation mit einem Wichtungsfaktor gemäß dem kennzeichnenden Merkmal des unabhängigen Anspruchs 1 eine Absenkung der Klopfschwelle. Die Multiplikation mit einem Wichtungsfaktor WF<1 bietet den Vorteil, daß bei einem Motorgeräusch, das außerhalb eines vorgebbaren Normalbereichs NB liegt, die ständig nachgeführte Klopfschwelle nicht zu groß wird und so auch bei sehr lautem Motor noch Klopfen erkannt werden kann.

Durch die in den Unteransprüchen aufgeführten Maßnahmen sind vorteilhafte Weiterbildungen und Verbesserungen der in den unabhängigen Ansprüchen angegebenen Verfahren möglich. Besonders vorteilhaft ist, daß für jeden Motorbetriebspunkt ein Normalbereich festgelegt werden kann und somit sowohl bei niedriger Drehzahl und kleiner Last bzw. bei hoher Drehzahl und hoher Last ein entsprechender Wichtungsfaktor ausgegeben werden kann. Letztendlich besteht ein weiterer Vorteil in der zylinderindividuellen Festlegung des Normalbereichs.

Die Festlegung des Normalbereichs NB ist vorteilhafterweise für jeden Motortyp in Abhängigkeit vom Anbauort des Klopfsensors in der Applikation festzulegen. Damit hat jeder Motortyp seine auf ihm individuell zugeschnittenen Werte und ermöglicht damit eine optimale Klopfregelung.

### Zeichnung

Ausführungsbeispiele der Erfindung sind in der Zeichnung dargestellt und in der nachfolgenden Beschreibung näher erläutert. Es zeigen Figur 1 ein Blockschaltbild für die Klopferkennung, Figur 2 die Begrenzung des Referenzpegels mit einer Abschaltung der Klopfregelung, Figur 3 ein Blockschaltbild zur Durchführung der Begrenzung der Klopfschwelle und Figur 4 zeigt eine schaltungsgemäße Ausgestaltung zur Durchführung einer Klopfregelung.

### Beschreibung der Ausführungsbeispiele

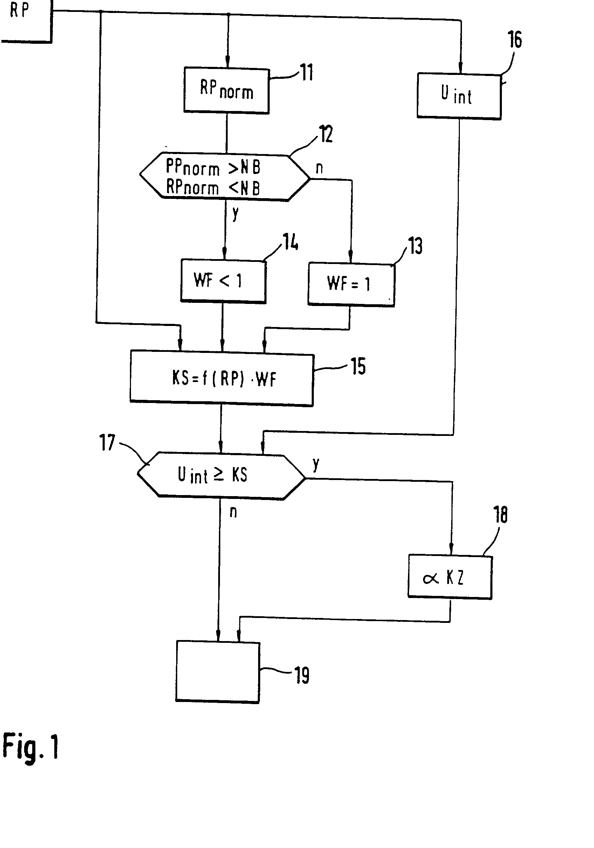

Figur 1 zeigt schematisch das Blockschaltbild zur Klopfregelung mit einer Wichtung der Klopfschwelle KS, bei dessen Überschreitung Klopfen erkannt wird. Ein nicht dargestellter Klopfsensor erfaßt für jeden Zylinder über einen bestimmten Kurbelwellenwinkel den Geräuschpegel in den Zylindern. Die Klopfschwelle KS, bei dessen Überschreitung Klopfen erkannt wird, ist nicht fest vorgegeben, sondern wird mit jeder Verbrennung zyklisch erneuert. Die Festlegung der Klopfschwelle KS erfolgt, indem die vorherige Klopfschwelle mit dem aktuellen Referenzpegel RP beaufschlagt wird. Der Referenzpegel RP bildet die Eingangsgröße 10 für die Klopferkennung. Aus dem Referenzpegel RP wird in einem Schritt 11 für einen objektiven Vergleich der einzelnen Referenzpegel RP der normierte Referenzpegel RPnorm, indem man den Referenzpegel RP durch den zylinderindividuellen Verstärkungsfaktor dividiert, bestimmt. Dies ist notwendig, da um alle KLopfsensorsignale in einer Auswerteschaltung richtig verarbeiten zu können, die vom Klopfsensor gelieferten Signale in der Art verstärkt werden, daß bei großen Signalen die Verstärkung klein und bei kleinen Signalen die Verstärkung groß ist. Damit wird erreicht, daß das Ausgangssignals des dem Klopfsensor nachgeordneten und ebenfalls nicht dargestellten Verstärkers über den gesamten Drehzahlbereich annähernd konstant ist. In einer anschließenden Abfrage 12 wird untersucht, ob der normierte Referenzpegel RPnorm, welcher auch zylinderindividuell vorliegen kann, in einem festlegbaren Normalbereich NB liegt. Der Normalbereich NB wird beispielsweise in der Applikation für den Motortyp festgelegt. Dabei wird zum einen untersucht, ob der normierte Referenzpegel RPnorm den Normalbereich NB überoder unterschreitet. Ein Nein auf diese Abfrage 12, d.h. der normierte Referenzpegel liegt innerhalb des Normalbereiches NB, führt zu dem Arbeitsschritt 13 und der Ausgabe eines Wichtungsfaktors WF mit dem Wert 1. Ein Ja auf die Abfrage 12, d.h. der normierte Referenzpegel RPnorm liegt nicht in dem vorgebbaren Normalbereich NB, führt zum Arbeitsschritt 14 und der Ausgabe eines Wichtungsfaktors WF kleiner als 1, so sind beim Überschreiten des Normalbereiches NB beispielsweise folgende Werte als Wichtungsfaktoren möglich: WF₁=0,9, WF₂=08, WF₃=0,65. Diese Wichtungsfaktoren WF können dabei für unterschiedliche Motorbetriebspunkte unterschiedlich festgelegt werden, wobei die Anpassung mit den zugehörigen Schwellen für den Normalbereich des normierten Referenzpegels möglichst an mehreren Motoren, welche ein normales Geräuschverhalten über den ganzen Drehzahlbereich aufweisen, durchgeführt werden. An diesen Motoren sollten für die Bestimmung des Normalbereichs NB Klopfsensoren mit maximaler Empfindlichkeit montiert werden, um an den gewünschten Drehzahlstützstellen der Kennlinie den normierten Referenzpegel von allen Zylindern ermitteln zu können. Im Arbeitsschritt 15 wird die Klopfschwelle KS aus dem Referenzpegel RP und dem Wichtungsfaktor WF bestimmt. Die Klopfschwelle KS stellt dabei die Schwelle dar, bei deren Überschreitung Klopfen erkannt wird. Parallel dazu erfolgt in einem Arbeitschritt 16 für jeden Zylinder die Bestimmung des Klopfintegrals Uᵢₙₜ. In einer Abfrage 17 wird das Klopfintegral Uᵢₙₜ mit der Klopfschwelle KS verglichen. Ist der Integralwert Uᵢₙₜ größer als die Klopfschwelle KS, wird Klopfen erkannt und der Ja-Ausgang auf diese Abfrage 17 führt zu einem Arbeitsschritt 18, in welchem ein Korrekturzündwinkel α_{KZ} ausgegeben wird. Dieser Korrekturzündwinkel wird nun beispielsweise auf den Kennfeldzündwinkel adaptiv aufgeschlagen. Im anschließenden Arbeitsschritt 19 wird zurückgesprungen und die Auswertung für die nächste Verbrennung vorgenommen.

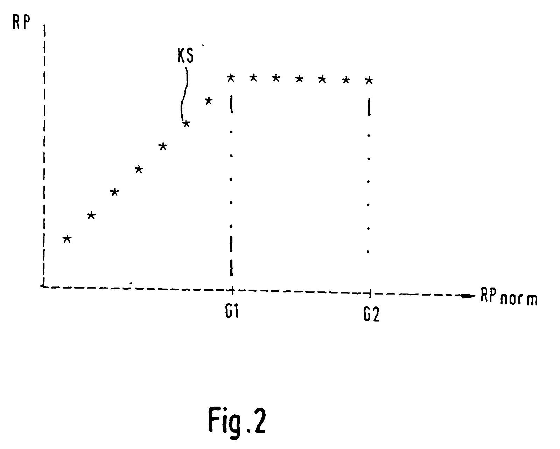

Figur 2 zeigt eine alternative Lösung desselben Problems, wobei hier eine Begrenzung der nachgeführten Klopfschwelle vorgenommen wird, wie nachfolgend erläutert werden soll. In Figur 2 wird hierzu anhand eines Diagrammes aufgeführt, wie sich die Klopfschwelle KS bei zunehmendem Motorgeräusch, also bei steigendem Referenzpegel RP verändert. Die Klopfschwelle KS steigt demzufolge an bis der normierte RP den ersten Grenzwert G1 erreicht, ab welchem die Klopfschwelle begrenzt wird.

Somit ist eine Klopferkennung auch bei stark ansteigendem Motorgeräusch möglich, da gewährleistet ist, daß die Klopfschwelle begrenzt wird und so zumindest starke Klopfer erkannt werden. In dem Diagramm ist eine zweite Grenzwertgröße G2 definiert, ab welcher die Klopfregelung ganz abgeschaltet werden kann und vom Steuergerät ein Sicherheitsspätverstellzündwinkel ausgeben wird. Durch dieses Verfahren ist ein abgestuftes Vorgehen zum Schutze des Motors möglich.

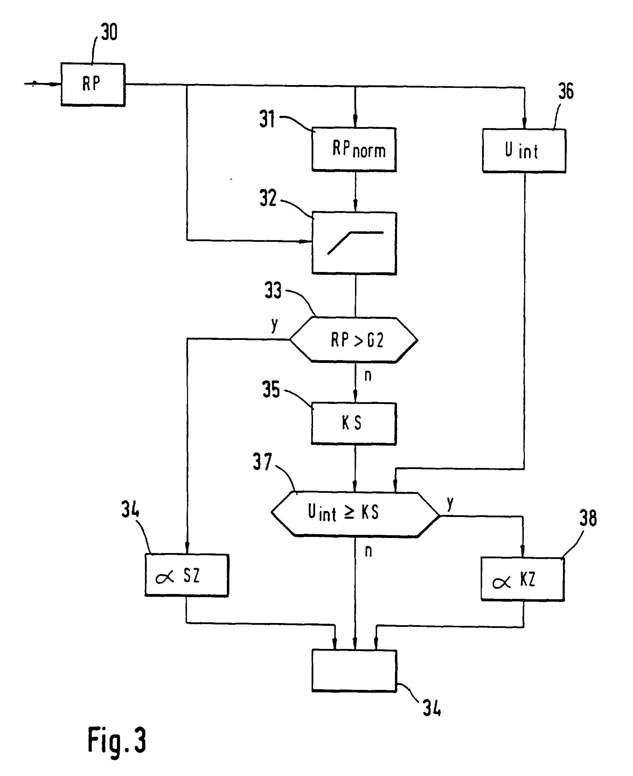

Figur 3 zeigt einen Ablaufplan zur Durchführund des alternativ vorgeschlagenen Verfahrens, wie es bereits zu Figur 2 erläutrt wurde. Ein nicht dargestellter Klopfsensor erfaßt die Motorgeräusche und in einem ersten Arbeitsschritt 30 wird der Referenzpegel RP gebildet. Dieser Referenzpegel RP wird wie bereits erläutert nach jeder Verbrennung zyklisch erneuert. In einem Arbeitsschritt 31 wird nun wiederum für jeden Zylinder der normierte Referenzpegel bestimmt. Dieser normierte Referenzpegel RPnorm und der Referenzpegel RP bilden die Werte auf der Abzisse bzw. Ordinate des Diagramms gemäß Figur 2. Im Arbeitsschritt 32 werden diese Werte ausgewertet und der Referenzwert bei Erreichen eines ersten Grenzwertes G1 auf diesen begrenzt. In der anschließenden Abfrage 33 wird geprüft, ob der normierte Referenzpegel, welcher nicht begrenzt wird, einen zweiten Grenzwert G2 erreicht hat. Ist dies der Fall, so führt der Ja-Ausgang an einen Arbeitsschritt 34, die Klopfregelung wird ausgeschaltet und gleichzeitig ein Sicherheitsspätverstellzündwinkel α_{SZ} ausgegeben.

Wurde die Abfrage 33 mit Nein beantwortet, so wird in einem Arbeitsschritt 35 der Referenzwert für die Klopferkennung bestimmt. Parallel dazu wird in einem Arbeitsschritt 36 das Klopfsensorintegral Uᵢₙₜ gebildet. In der Abfrage 37 wird nun untersucht, ob das Meßintegral Uᵢₙₜ die Klopfschwelle KS erreicht bzw. überschreitet. Ist dies der Fall, so wird ein Klopfen erkannt und in einem Arbeitsschritt ein Korrekturzündwinkel α_{ZK} ausgegeben. Anschließend wird in einem Arbeitsschritt 39 zurückgesprungen an den Anfang des Ablaufplans und der nächste erfaßte Referenzpegel verarbeitet.

Die Begrenzung der Klopfschwelle kann hierbei auch zylinderindividuell erfolgen.

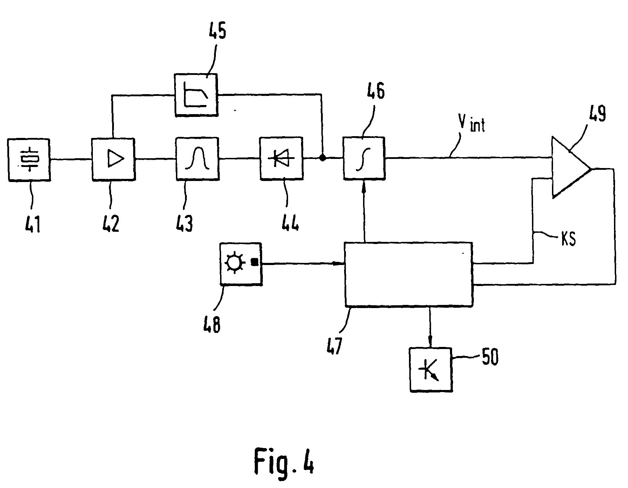

Figur 4 zeigt ein Schaltungsbeispiel zur Klopfregelung, wobei ein Klopfsensor 41 die Motorgeräusche einer nicht dargestellten Brennkraftmaschine erfaßt. Die erfaßten Motorgeräusche werden über einen regelbaren Verstärker 42 und einen Bandpaß 43 an eine als Gleichrichter 44 ausgebildete Demodulatorschaltung geführt. Der Gleichrichter 44 ist einerseits über einen Regler 45 mit dem regelbaren Verstärker 42 und andererseits mit einem Integrator 46 verbunden. Durch die Regelung der Verstärkung wird erreicht, daß der Referenzpegel des Ausgangssignals des Regelverstärkers weitgehend konstant und unabhängig von der Motordrehzahl ist, während die Singalamplitude des Klopfsensors 41 mit der Motordrehzahl zunimmt. Der Integrator 46 bildet während eines kurbelwellensynchronen Meßfensters, welches von einem Steuergerät 47 in Abhängigkeit eines Drehzahlgebers 48 gebildet wird, das Meßintegral Uᵢₙₜ. Dieses Meßintegral Uᵢₙₜ wird in einem Komparator 49 mit der vom Steuergerät 47 vorgegebenen Klopfschwelle KS verglichen und ein Ausgangssignal des Komparators 49 wiederum zur Klopfregelung an das Steuergerät 47 geführt. Vom Steuergerät 47 wird nun ein Ausgangssignal an eine Endstufe 50 zur Auslösung der Zündung in dem betreffenden Zylinder gegeben.

## Patentansprüche

1. Verfahren zur Klopferkennung für Brennkraftmaschinen, wobei Klopfen erkannt wird, wenn das erfaßte Klopfsignal eine Klopfschwelle, welche sich in Abhängigkeit vom Motorgeräusch verändert, überschreitet, dadurch gekennzeichnet, daß für jeden Motorbetriebspunkt ein Normalbereich (NB) des Motorgeräuschs in Abhängigkeit eines normierten Referenzpegels (RPnorm) berechnet wird, und daß bei einem normierten Referenzpegel (RPnorm) der über dem Normalbereich (NB) liegt, die Klopfschwelle (KS) mit einem Wichtungsfaktor (WF) kleiner als 1 multipliziert wird.

2. Verfahren nach Anspruch 1, dadurch gekennzeichnet, daß die Klopfschwelle nach jeder Verbrennung zyklisch erneuert wird.

3. Verfahren nach Anspruch 1 und 2, dadurch gekennzeichnet, daß der Normalbereich (NB) des normierten Referenzpegels zylinderindiviiduell festgelegt wird.

4. Verfahren nach einem der vorherigen Ansprüche, dadurch gekennzeichnet, daß der Wichtungsfaktor (WF) für jeden Motortyp in der Applikation festgelegt wird.

5. Verfahren nach einem der vorherigen Ansprüche, dadurch gekennzeichnet, daß die Wichtungsfaktoren (WF) für unterschiedliche Motorbetriebspuunkte festgelegt werden.

## Claims

1. Method for detecting knocking in internal combustion engines, knocking being detected if the sensed knocking signal exceeds a knocking threshold which changes as a function of the engine noise, characterized in that the normal range (NB) of the engine noise is calculated for each engine operating point as a function of a normalized reference level (RPnorm), and in that in the case of a normalized reference level (RPnorm) which lies above the normal range (NB) the knocking threshold (KS) is multiplied by a weighting factor (WF) which is less than 1.

2. Method according to Claim 1, characterized in that the knocking threshold is renewed cyclically after each combustion.

3. Method according to Claim 1 and 2, characterized in that the normal range (NB) of the normalized reference level is specified on a cylinder-specific basis.

4. Method according to one of the preceding claims, characterized in that the weighting factor (WF) is specified for each engine type in the application.

5. Method according to one of the preceding claims, characterized in that the weighting factors (WF) are specified for different engine operating points.

## Revendications

1. Procédé de détection du cliquetis de moteurs à combustion interne, dans lequel on détecte un cliquetis quand le signal de cliquetis détecté dépasse un seuil de cliquetis qui se modifie en fonction du bruit du moteur, caractérisé en ce que
• pour chaque point de fonctionnement du moteur, on calcule une zone normale (NB) du bruit du moteur en fonction d'un signal de référence normalisé (RPnorm), et
• lors d'un niveau de référence normalise (RPnorm) qui se trouve au dessus de la zone normale (NB), on multiplie le seuil de cliquetis (KS) par un coefficient de pondération (WF) inférieur à 1.

2. Procédé selon la revendication 1,
caractérisé en ce que
le seuil de cliquetis est renouvelé cycliquement après chaque combustion.

3. Procédé selon la revendication 1 et 2,
caractérisé en ce que
la zone normale (NB) du niveau de référence normalisé est déterminée individuellement pour chaque cylindre.

4. Procédé selon l'une des revendications précédentes,
caractérisé en ce que
le coefficient de pondération (WF) est déterminé pour chaque type de moteur dans l'application.

5. Procédé selon l'une des revendications précédentes,
caractérisé en ce que
les facteurs de pondération (WF) sont déterminés pour des points de fonctionnement différents du moteur.
